# EUROPEAN PATENT APPLICATION

(11) **EP 3 690 417 A1**
(43) Date of publication of application: **05.08.2020**
(21) Application number: 20020053.3
(22) Date of filing: 31.01.2020
(51) Int. Cl.: G01L 21/12, G01L 9/06

(54) **APPARATUS FOR HEAT-LOSS VACUUM MEASUREMENT WITH IMPROVED TEMPERATURE COMPENSATION AND EXTENDED MEASUREMENT RANGE**

(30) Priority: 01.02.2019 DK PA201900153
(71) Applicant: Sens4 A/S, 3150 Hellebaek (DK)
(72) Inventor: Wenzel, Ole, 3140 Aalsgaarde (DK); Christiansen, Caspar Ask, 3540 Lynge (DK); Marstrand, Mads, 2880 Bagsvaerd (DK)

(57) **Abstract**

The invention relates to operation of a heat-loss thermal conductivity vacuum pressure gauge based on a resistive heat-loss sensor element (RP) and a temperature sensor element (RT) or semiconductor device for measuring ambient temperature. The lean circuit, without traditional Wheatstone bridge operation, the ratiometric digital conversion of measurement signals and the method of calibration provides close to perfect temperature compensation of pressure measurement drift as a function of ambient temperature variations and extend the useable measuring range down to 1E-6 mbar or lower, 1 to 4 decades lower than traditional Pirani- and convection-type vacuum gauges.

## Description

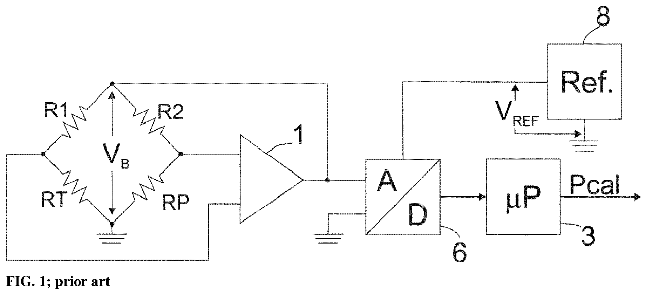

Traditional vacuum gauges of the heat-loss type are typically based on a thermal conductivity sensor operated in a Wheatstone bridge circuit as described in GB2105472A. A Wheatstone bridge is an electrical circuit used to measure an unknown electrical resistance by balancing two legs of a bridge circuit, one leg of which includes the unknown component, where the unknown component in the traditional heat-loss vacuum gauge is a suspended heated resistive wire filament or a resistive element deposited on a suspended MEMS (micro-electro-mechanical system) diaphragm exposed to the vacuum where the gas pressure is to be measured. The sensor technology is often referred to as a Pirani sensor, Convection gauge or heat-loss sensor in the vacuum literature. The Wheatstone bridge circuit shown in (FIG. 1) includes a primary resistive heat-loss sensor element (RP), a secondary temperature sensor element (RT), two fixed resistors (R1) and (R2) dimensioned so that the ratio (R1)/(RT) equals (R2)/(RP) along with an operational amplifier (1) to balance the circuit. The operational amplifier (1) regulates the bridge voltage (VB), so that the temperature of the heat-loss sensor element (RP) remains constant and hence the resistance remains constant to preserve the condition that (R1)/(RT) equals (R2)/(RP). The ideally balanced Wheatstone bridge is theoretically independent of temperature variations. However, multiple factors contribute to measurement drift in the traditional balanced Wheatstone bridge circuit which uses an analog-to-digital converter (6) to measure the bridge voltage (VB): temperature drift of the fixed resistors (R1) and (R2), offset drift of the operational amplifier (1), temperature drift of the analog-to-digital reference voltage generated by the voltage reference source (8). In an ideally designed Wheatstone bridge the temperature coefficient of resistance of the temperature sensor element (RT) and the heat-loss sensor element (RP) are equal in order to minimize temperature drift effects. However, this can be difficult to achieve in practice and any difference will impact the temperature stability of the bridge in a negative way.

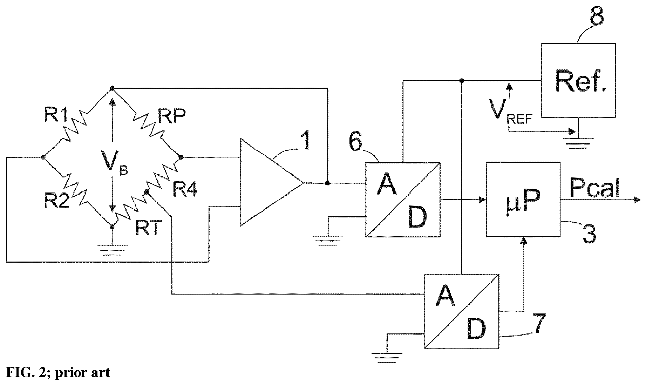

Thermal conductivity Pirani vacuum gauges require temperature compensation to determine if a change in the resistance of the heat-loss sensor element (RP) is associated with energy loss from the heat-loss sensor element (RP) or if it is associated with a change in ambient temperature. The lowest detectable pressure is determined by the point where the pressure dependent heat-loss of the heat-loss sensor element (RP) becomes small compared to the sum of the pressure independent heat radiation loss and the thermal conduction to the sensor structure in physical contact with the heat-loss sensor element (RP). The temperature stability of the measuring circuit used to quantify the pressure dependent heat-loss of the sensor element is also an important factor in being able to reliably measure the lowest detectable pressure of the vacuum gauge. The lowest detectable pressure of traditional Pirani type sensor is typically in the range from 1E-5 mbar to 1E-3 mbar. An approach to improve temperature compensation for vacuum gauges with a balanced Wheatstone bridge circuit is described in US5,608,168 and shown in (FIG. 2). A secondary measurement of the temperature is performed by measurement of the voltage across the temperature sensor element (RT) in one sub-set of one the legs in the balanced Wheatstone bridge. The measured voltage is converted to a digital value in the analog-to-digital converter (7) and used for a secondary temperature compensation of the Wheatstone bridge voltage (VB) by the microprocessor. The described circuit has multiple elements (R1), (R2), (R4), (1), (6), (7), and (8) with different temperature coefficients that can drift positively or negatively, and consequently perfect temperature compensation cannot be achieved in such a circuit. Furthermore, input voltage noise in the operational amplifier (1) can introduce noise into the bridge circuit and as a result impose noise on the voltage measurement performed by the analog-to-digital converters (6) and (7) and thus limit the measurement range of the sensor.

### DESCRIPTION OF THE INVENTION

In a first aspect, the invention relates to a heat-loss vacuum pressure gauge comprising the following elements:
a heat-loss sensor element (RP) connected in series with an ohmic resistor circuit to form a voltage divider, and
a temperature sensor element (RT) connected in series with an ohmic resistor circuit to form a voltage divider, and
an analog-to-digital converting means, capable of converting a voltage across the heat-loss sensor element (RP) to a digital value and capable of converting a voltage across the temperature sensor element (RT) to a digital value, and
a microprocessor (3) for computing a vacuum gas pressure based on the digital values provided by said converting means, and
a non-volatile memory (9) to store digital values of calibration and temperature constants, and a voltage reference source (8) that supplies said voltage dividers and said converting means.

In one embodiment said heat-loss sensor element (RP) is a resistive sensor element deposited on a semiconductor structure that comprises a suspended diaphragm or deposited directly on the substrate, preferably exposed to the vacuum where the gas pressure is to be measured.

The heat-loss sensor element (RP) may for example be a suspended resistive wire.

In one embodiment the temperature sensor element (RT) is a semiconductor type temperature sensor or circuit that can provide an analog or digital representation of the ambient temperature for temperature compensation of heat-loss sensor measurement.

In one embodiment said analog-to-digital converting means comprises two separate analog-to-digital converters (6) and (7), where one analog-to-digital converter (6) converts the voltage difference across said temperature sensor element (RT) and the other analog-to-digital converter (7) converts the voltage difference across said heat-loss sensor element (RP).

In one embodiment said analog-to-digital converting means comprises a single analog-to-digital converter with a multiplexer to switch between the measurement of the voltage difference across said heat-loss sensor element (RP) and said temperature sensor element (RT).

In one embodiment said analog-to-digital converting means, microprocessor (3), voltage reference source (8) and non-volatile memory (9) is an integrated device commonly referred to as an analog microcontroller unit.

The heat-loss vacuum pressure gauge of any of the preceding claims, wherein said voltage reference source (8) is configured as a constant current source.

A heat-loss sensor element comprises a resistive heated element, also referred to as a filament or heated element, located in the vacuum where the gas pressure is to be measured. The heated element can comprise a resistive wire preferably mechanically suspended, or a deposited metallic sheet located on a solid structure. The solid structure can be a made by using microfabrication techniques, sometimes referred to as MEMS. The deposited metallic sheet can be located on a suspended diaphragm or directly on the substrate. When electrical current passes through the heat-loss sensor element, heat can be generated by the phenomena of joule heating due to the encountered electrical resistance. The heat-loss sensor element can be connected in series with a circuit with an ohmic resistance to form a voltage divider. The circuit connected in series with the heat-loss sensor element can comprise one or more ohmic resistors that act as one ohmic resistance. The circuit connected in series with the heat-loss sensor element can comprise a variety of different electrical components connected in series or in parallel. Preferably, the circuit act as well-defined ohmic resistance. This type of circuit can also be referred to as a fixed resistor. Preferably, the ohmic resistor circuit has an ohmic resistance that is not affected by temperature changes to the same extent as the heat-loss sensor element within the temperature range of 0 to 500 °C. A voltage divider, sometimes referred to as a potential divider, can be a circuit with two or more resistive elements connected in series, also referred to as daisy chained. When the resistance changes in one of the series connected resistive elements the voltage across that component also changes, provided that the percentual change does not equal the percentual change of the total resistance of the remaining series connected resistive elements.

A temperature sensor element can be part of a temperature sensing circuit for measuring the ambient temperature and can comprise a resistive temperature sensor element that changes resistance when the temperature changes. A resistive temperature sensor element can be made of a material that changes resistance as a function of temperature. A resistive temperature sensor element can be a resistive wire, a resistive element commonly referred to as an RTD (resistance temperature detector) or a thermistor.

The temperature sensor element can be connected in series with a circuit with an ohmic resistance to form a voltage divider. The circuit connected in series with the temperature sensor element can comprise one or more ohmic resistors that act as one ohmic resistance. The circuit connected in series with the temperature sensor element can comprise a variety of different electrical components connected in series or in parallel. Preferably, the circuit act as well-defined ohmic resistance. This type of circuit can also be referred to as a fixed resistor. Preferably, the ohmic resistor circuit has an ohmic resistance that is not affected by temperature changes to the same extent as the temperature sensor element within the temperature range of 0 to 500 °C. A voltage divider, sometimes referred to as a potential divider, can be a circuit with two or more resistive elements connected in series, also referred to as daisy chained. When the resistance changes in one of the series connected resistive elements the voltage across that component also changes, provided that the percentual change does not equal the percentual change of the total resistance of the remaining series connected resistive elements.

A temperature sensor element can also be made of a semiconductor integrated circuit providing a voltage, current or digital output signal representing the ambient temperature.

For improved temperature uniformity, the temperature sensor element can comprise an array of temperature sensing elements that provide individual temperature measurements at multiple locations.

The analog-to-digital converting means can comprise an electrical circuit commonly referred to as an analog-to-digital converter for converting a variable input voltage relative to a reference input voltage to a digital value.

The microprocessor can be part of a circuit interfaced with the analog-to-digital converting circuit and may be utilized for computing a pressure reading based on the digital values provided by the analog-to-digital converting means that measures the voltages of the heat-loss sensor element and temperature sensor element.

A non-volatile memory, also referred to as non-volatile storage, is a memory or storage that retain the information stored in it even after power has been cycled.

A voltage reference source can be an electrical circuit that outputs a voltage, also referred to as an electrical potential, relative to another voltage electrical which can be the ground potential in the circuit. Preferably, the voltage reference source can maintain a constant potential difference between its input and output. The voltage reference source can be a series or shunt voltage reference. The voltage reference source can be an integrated circuit of the bandgap voltage type.

In one embodiment, said heat-loss sensor element (RP) can be a resistive sensor element deposited on a semiconductor structure that can comprise a suspended diaphragm or directly on the substrate, preferably exposed to the vacuum where the gas pressure is to be measured.

A semiconductor structure can be created by various chemical and physical processes, for example using a crystalline substrate as a basis. The substrate can comprise silicon or gallium arsenide. A suspended diaphragm can comprise a thin piece of material physically attached to the surroundings. Preferably, the diaphragm and the surrounding structure can be made from the same semiconductor material. The deposition of the resistive sensor element can be performed using a thin-film deposition technique. The resistive sensor element can be directly exposed to the vacuum gas or covered with a protective layer.

The resistive wire can be mechanically suspended by attaching it in each end to a mechanically supporting structure. The attachment of the wire can be performed by welding, soldering or by using a mechanical clamp. The resistive wire can be directly exposed to the vacuum gas or covered with a protective layer.

A multiplexer can be an electronic device that can have two or more analog or digital input signals and forward them to a single output line. It can also be referred to as a mux or a data selector. Preferably, the multiplexer has two analog inputs that can be connected across the heat-loss sensor element and the temperature sensor element, respectively. Preferably, a microcontroller can be used to select which of the input signals are forwarded to the output line. The output line can be connected to a single analog-to-digital converter.

In the present context, a vacuum gauge may be an apparatus with or without a direct display for measurement of vacuum gas pressure and can also be referred to as a vacuum transducer, vacuum transmitter, vacuum display or a vacuum sensor.

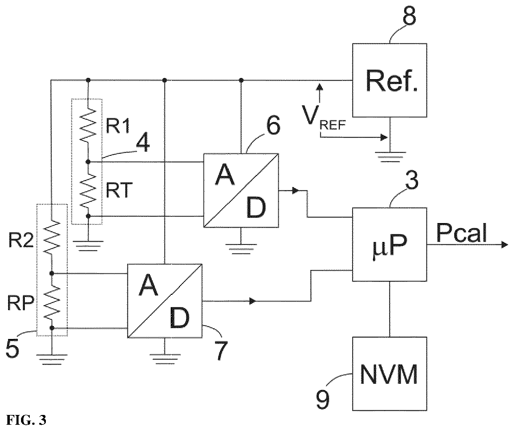

A heat-loss vacuum pressure gauge can be illustrated as the schematic shown in (FIG. 3) and can be used to measure the vacuum gas pressure by measuring the pressure dependent thermal conductivity from a heat-loss sensor element (RP) to the surrounding vacuum gas. As gas molecules collide with the heat-loss sensor element (RP), heat can be transported from the heat-loss sensor element (RP). Since the heat-loss changes with vacuum pressure gas density, the heat-loss sensor element (RP) will change temperature when the density of the gas changes and consequently the resistance of the heat-loss sensor element (RP) changes. The heated heat-loss sensor element (RP) can be a straight or coiled thin conductive wire with a diameter of < 100 µm and can as an example comprise tungsten, nickel, platinum, or alloys containing these metals. The heated filament can be operated at a variable or constant temperature in the range from 50 to 400 °C. Preferably, the filament wire can be mechanically suspended to reduce measurement errors due to thermal transportation from the filament to the supporting structure. The heated heat-loss sensor element (RP) can be part of a MEMS sensor structure with a resistive element deposited on a mechanically fixed thin membrane with a thickness of < 10 µm that can be made of silicon, silicon nitride, silicon oxide, gallium arsenide or parylene. The heat-loss sensor element (RP) on the membrane has a high temperature coefficient of resistance of > 1000 ppm/K and can be made of nickel, titanium, platinum or alloys of these materials. Preferably, the temperature sensor element (RT) has a similar temperature coefficient of resistance of > 1000 ppm/K as the heat-loss sensor element (RP) and can be made of the same material as the heat-loss sensor element (RP). Preferably, the physical distance between the heat-loss sensor element (RP) and the temperature sensor element (RT) can be minimized to reduce the temperature difference between the heat-loss sensor element (RP) point of measure and the temperature sensor element (RT) point of measure. The temperature sensor element (RT) can be directly exposed to the vacuum gas, of which the pressure is to be measured, or alternatively located in ambient atmospheric pressure conditions outside of the vacuum. The temperature sensor element (RT) can be made of an array of temperature sensors for improved temperature uniformity. The temperature sensor element (RT) can be made of a semiconductor integrated circuit or an array of semiconductor integrated circuits providing an analog output signal or digital value representing the ambient temperature.

The heat-loss sensor element (RP) can be connected in series with an ohmic resistance circuit (R2) forming a voltage divider (5) where the voltage across the heat-loss sensor element (RP) can be a function of the voltage reference source voltage (VREF), ambient temperature and heat-loss to the surrounding gas. Preferably, the resistance of the ohmic resistance circuit (R2) can be fixed and has a low temperature coefficient of resistance of < 15 ppm/K. Preferably, the voltage reference source voltage (VREF) can be a regulated voltage, however, the ratiometric measurement of the voltage across the heat-loss sensor element (RP) eliminates the requirement of a precision voltage reference to provide the voltage reference source voltage (VREF).

The voltage across the heat-loss sensor element (RP) and the temperature sensor element (RT) may be converted to a digital representation by one or more analog-to-digital converters (6) and (7). The voltage across the heat-loss sensor element (RP) and the voltage across the temperature sensor element (RT) may be converted in the analog-to-digital converter (6) and (7) relative to the voltage reference source voltage (VREF) and consequently variation of the voltage reference source voltage (VREF) does not impact the digital representation of the converted voltages across the heat-loss sensor element (RP) and the voltage across the temperature sensor element (RT). The analog-to-digital converters (6) and (7) can be substituted with a single channel analog-to-digital converter with a multiplexed input switching between the measurement of voltage across the temperature sensor element (RT) and the voltage across the heat-loss sensor element (RP).

The microprocessor (3), the voltage reference source (8), the non-volatile memory (9), and analog-to-digital converters (6) and (7) can be an integrated device commonly referred to as an analog microcontroller.

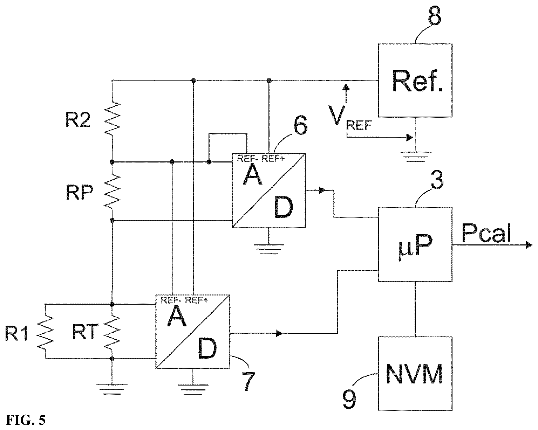

Another embodiment of the invention can be illustrated as shown in (FIG. 5) where the ohmic resistance circuit (R2) can be connected in series with the heat-loss sensor element (RP) and a parallel configuration of the ohmic resistance circuit (R1) and the temperature sensor element (RT). In this embodiment the reference voltage to the analog-to-digital converters (6) and (7) can be sourced across the ohmic resistance circuit (R2).

The processing circuit illustrated in (FIG. 3) and (FIG. 5) can be configured with a constant current source instead of using a voltage reference source (8).

A detailed description of the preferred embodiment of the invention follows.

(FIG. 3) illustrates a section of the electric circuit of a vacuum gas pressure measurement heat-loss gauge with a calibrated and temperature compensated digital pressure value output (Peal).

In (FIG. 3) the heat-loss sensor element (RP) can be exposed to the vacuum where the gas pressure is to be measured and the temperature sensor element (RT) can be exposed to the vacuum gas pressure or located at ambient pressure.

The heat-loss measurement voltage divider (5) comprises an ohmic resistance circuit (R2) with a low temperature coefficient of < 15 ppm/K daisy-chained with a heat-loss sensor element (RP) with a high temperature coefficient of > 1000 ppm/K. The resistive value of the ohmic resistance circuit (R2) can be selected based on the resistance of the heat-loss sensor element (RP) and can be dimensioned to provide adequate energy to the heat-loss sensor element (RP) for heating the sensor element in order to ensure effective emissivity to the surrounding gas for measurement of pressure by heat-loss. The heat-loss sensor element (RP) can be exposed to the vacuum gas pressure and for optimal sensitivity it can be deposited on a thin suspended MEMS membrane as described in US 5,597,957. At low pressure, where the thermal conductivity to the gas can be reduced, the voltage across the heat-loss sensor element (RP) increases and provides improved sensitivity. At higher pressure the thermal conductivity to the gas increases and heat from the heated heat-loss sensor element (RP) can be transported to the gas and consequently the voltage across the heat-loss sensor element (RP) decreases. The resistance of the heat-loss sensor element (RP) can be highly temperature dependent and consequently a pressure independent temperature reference, preferably the temperature sensor element (RT), can be required to compensate for temperature drift of the heat-loss sensor element (RP).

The temperature measurement voltage divider (4) comprises an ohmic resistance circuit (R1) with a low temperature coefficient of < 15 ppm/K daisy-chained with a temperature sensor element (RT) with a high temperature coefficient of > 1000 ppm/K. The resistive value of the ohmic resistance circuit (R1) can be selected based on the resistance of the temperature sensor element (RT) and must be dimensioned to prevent self-heating of the temperature sensor element (RT) and reduce thermal transportation to the gas that can result in vacuum pressure dependency of the voltage across the temperature sensor element (RT).

The temperature gradients between the temperature sensor element (RT) and the heat-loss sensor element (RP), should be reduced by locating them closely. The temperature sensor element (RT) can be placed on the MEMS supporting structure holding the suspended membrane with the heat-loss sensor element (RP).

A common reference voltage source (8) can be used to provide a regulated voltage for the heat-loss vacuum pressure sensor voltage divider 5, the temperature measurement voltage divider 4 and the analog-to-digital converters (6) and (7). The analog-to-digital converters (6) and (7) can be integrated circuits that convert an input voltage potential relative to a reference voltage potential to a digital counts value directly proportional to in the input voltage. The required digital resolution and performance requirements of analog-to-digital converter (6) and (7) depend on the physical properties of the used heat-loss sensor. Commercially available analog-to-digital converters with resolution of > 15 bits can be used. The voltage reference source (8) can be an integrated semiconductor circuit that regulates the voltage reference source voltage (VREF) to a known fixed value ideally independent of temperature, load and input voltage. Other circuit topologies can be used to provide the voltage reference source voltage (VREF) including Zener diode shunt regulation. The voltage reference source voltage (VREF) should be selected based on the used heat-loss sensor technology, resistive properties and its power requirement to operate at a given heated operation temperature. The voltage reference source voltage (VREF) can be amplified using an operational amplifier circuit or a transistor circuit to amplify output voltage or current output. The voltage reference source voltage (VREF) can typically be in the voltage range from 0.8 to 15 VDC. A given percentage change in the voltage reference source voltage (VREF) can be countered by the same percentage change in the analog-to-digital conversion process. Each output from the analog-to-digital converters (6) and (7) can be a digital representation of the ratio of the voltage measured across the heat-loss sensor element (RP) and the voltage measured across the temperature sensor element (RT) respectively, to the analog-to-digital converter reference input generated by the voltage reference source (8). Consequently, the ratiometric operation of the temperature measurement voltage divider (4) and the heat-loss voltage divider (5) eliminates analog-to-digital measurement errors due to variations in the voltage reference source voltage (VREF) typically caused by temperature drift, long term drift and load. The voltage reference source voltage (VREF) used by the analog-to-digital converters (6) and (7), the temperature compensation voltage divider (4) and the heat-loss voltage divider (5) can be at the same voltage level or different voltage levels when the different voltage levels are ratiometrically maintained. The processing circuit with ratiometric measurement operation eliminates requirements for high performance and ultra-stable voltage references typically used in precision analog-to-digital converter circuits.

The two analog-to-digital converters (6) and (7) provide digital values in the unit "counts" as a function of the voltages across the temperature sensor element (RT) and the heat-loss sensor element (RP), respectively.

Calibration and temperature compensation can be performed by acquiring multiple sets of data comprising the voltage measured across the temperature sensor element (RT) converted to counts, the voltage measured across the heat-loss sensor element (RP) converted to counts, and a reference pressure value measured by auxiliary external calibrated reference vacuum pressure gauges at different pressures throughout the useable measurement range and at different temperatures. These sets of data points can be used to calculate calibration and temperature constants by the microprocessor (3) or external auxiliary calibration equipment. The calculated calibration constants are stored in the non-volatile memory (9).

The non-volatile memory (9) can be placed on the microprocessor circuit board or alternatively placed in the heat-loss sensor assembly if the sensor assembly can be separated partly or completely from the microprocessor circuit including analog-to-digital converters (6) and (7), voltage reference source (8) and microprocessor (3). The non-volatile memory (9) can be an integrated memory device in a microcontroller or a stand-alone integrated circuit.

Precision voltage calibration, including full-scale adjustment and zero offset adjustment, of the analog-to-digital converters (6) and (7), used for measuring the voltage across the temperature sensor element (RT) and the heat-loss sensor element (RP), can be eliminated with the described method of pressure calibration and temperature compensation procedure.

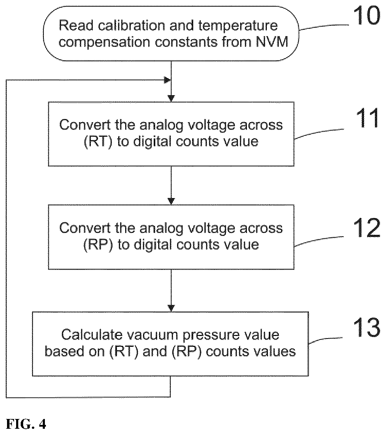

The flow chart shown in (FIG. 4) illustrates the normal operation of the vacuum gauge. The process starts with step 10 transferring the digital calibration constants and temperature compensation constants from the non-volatile memory (9) to the internal memory of microprocessor (3). In step (11) the voltage across the temperature sensor element (RT) can be converted to digital counts and in step (12) the voltage across the heat-loss sensor element (RP) can be converted to digital counts. In step (13) the converted voltages measured across the heat-loss sensor element (RP) and the temperature sensor element (RT) are mathematically converted in the microprocessor (3) to a temperature compensated and calibrated digital value representing the vacuum gas pressure value. The mathematical models and algorithms used for calculating the pressure reading real-time in the microprocessor utilizes non-linear curve-fitting based on the voltage measured across the heat-loss sensor element (RP) and the voltage measured across the temperature sensor element (RT) converted to counts. The calibration data can comprise multiple data points measured at different pressures and temperatures.

With the processing circuitry and method of calibration described above the measurement range of the vacuum gauge can be extended by 1-4 decades compared to a typical Pirani and convection sensor-based vacuum gauge and the minimum detectable vacuum pressure can be in the range from 1E-7 to 1E-6 mbar, which can be 1-4 decades lower than typical Pirani and convection sensor-based vacuum gauges.

This invention can be applied to any type of heat-loss vacuum gauge comprising a heat loss sensor element and a temperature sensing element or active semiconductor temperature sensing device. This invention can be part of a vacuum pressure measurement gauge, transducer or transmitter that provides an analog voltage output, analog current output, switching output or digital output using a digital communication protocol.

This invention can be integrated in a multi-sensor vacuum pressure measurement gauge, transducer or transmitter where other sensor technologies and measuring circuits extends the measuring range or provides enhanced performance in a part of or in the entire measurement range.

The electrical diagram shown in (FIG. 5) can be an alternative way of configuring the circuit. The ohmic resistance circuit (R2) can be connected in series with the heat-loss sensor element (RP) and a parallel configuration of the ohmic resistance circuit (R1) and the temperature sensor element (RT). In this embodiment the reference voltage to the analog-to-digital converters (6) and (7) can be sourced across the ohmic resistance circuit (R2).

## Claims

1. A heat-loss vacuum pressure gauge comprising:
a. a heat-loss sensor element (RP) connected in series with an ohmic resistor circuit to form a voltage divider,
b. a temperature sensor element (RT) connected in series with an ohmic resistor circuit to form a voltage divider,
c. analog-to-digital converting means, converting a voltage across the heat-loss sensor element (RP) to a digital value and converting a voltage across the temperature sensor element (RT) to a digital value,
d. a microprocessor (3) for computing the vacuum gas pressure based on the digital values provided by said converting means,
e. a non-volatile memory (9) to store digital values of calibration and temperature constants, and
f. a voltage reference source (8) that supplies said voltage dividers and said converting means.

2. The heat-loss vacuum pressure gauge of claim 1, wherein said heat-loss sensor element (RP) is a resistive sensor element deposited on a semiconductor structure that comprise a suspended diaphragm or deposited directly on the substrate, preferably exposed to the vacuum where the gas pressure is to be measured.

3. The heat-loss vacuum pressure gauge of claim 1 or 2, wherein said heat-loss sensor element (RP) is a suspended resistive wire.

4. The heat-loss vacuum pressure gauge of any of the preceding claims, wherein a semiconductor temperature sensor or circuit provides an analog or digital representation of the ambient temperature for temperature compensation of heat-loss sensor measurement.

5. The heat-loss vacuum pressure gauge of any of the preceding claims, wherein said analog-to-digital converting means comprises two separate analog-to-digital converters (6) and (7), where one analog-to-digital converter (6) converts the voltage difference across said temperature sensor element (RT) and the other analog-to-digital converter (7) converts the voltage difference across said heat-loss sensor element (RP).

6. The heat-loss vacuum pressure gauge of any of the preceding claims, wherein said analog-to-digital converting means comprises a single analog-to-digital converter with a multiplexer to switch between the measurement of the voltage difference across said heat-loss sensor element (RP) and said temperature sensor element (RT).

7. The heat-loss vacuum pressure gauge of any of the preceding claims, wherein said analog-to-digital converting means, microprocessor (3), voltage reference source (8) and non-volatile memory (9) is an integrated device commonly referred to as an analog microcontroller unit.

8. The heat-loss vacuum pressure gauge of any of the preceding claims, wherein said voltage reference source (8) is configured as a constant current source.
